# EUROPÄISCHE PATENTSCHRIFT

(11) **EP 0 763 445 B1**
(45) Veröffentlichungstag und Bekanntmachung des Hinweises auf die Patenterteilung: **10.05.2000**
(21) Anmeldenummer: 96114770.9
(22) Anmeldetag: 14.09.1996
(51) Int. Cl.: B60P 1/64

(54) **Transportfahrzeug**
Transport vehicle
Véhicule de transport

(30) Priorität: 14.09.1995 DE 19533985
(43) Veröffentlichungstag der Anmeldung: 19.03.1997
(73) Patentinhaber: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(56) Entgegenhaltungen:
- DE-B- 1 247 152
- DE-U- 9 313 753
- FR-A- 1 278 053
- FR-A- 2 029 637
- GB-A- 1 234 630
- US-A- 3 083 852
- US-A- 3 667 635

## Beschreibung

Die Erfindung bezieht sich auf ein Transportfahrzeug mit einem über ein Fahrwerk gegen den Boden abgestützten, in der Draufsicht im Wesentlichen U-förmigen, nach hinten offenen Chassis und einer vermittels einer insbesondere durch paarweise und jeweils als Parallelogramm angeordnete Hubhebel gebildeten, antreibbaren Hubeinrichtung an dieses angeschlossenen Lasttrageinrichtung, wobei die Lasttrageinrichtung vermittels um horizontale Achsen schwenkbarer Hubhebel zwischen einer auf den Boden abgesenkten Lastaufnahmestellung und einer angehobenen Fahrstellung hin und her bewegbar ist.

Ein Transportfahrzeug dieser Bauart ist aus dem DE-U- 93 13 753 bekannt. Zur Ausbildung eines auch hohen Belastungen sowohl durch die Last selbst als auch durch im Fahrbetrieb auftretende Stöße ist bei dieser bekannten Bauart eines als Anhänger, insbesondere für PKW, ausgebildeten Transportfahrzeuges vorgesehen, daß eine innerhalb des in der Draufsicht U-förmigen Chassis aufgenommene und vermittels einer fahrzeugeigenen Hubeinrichtung aus einer angehobenen Fahrstellung in eine abgesenkte Beladestellung verstellbare Ladeplattform mit Traversen versehen ist, welche bei in die Fahrtstellung angehobener Ladeplattform die Seitenrahmen des Chassis untergreifenden und mittels einer der Ladeplattform zugeordneten Hubeinrichtung sowie einer zusätzlichen Rasteinrichtung gegen die Unterseite der Seitenrahmen des Chassis verspannbar sind. Diese Gestaltung eines Transportfahrzeuges ermöglicht zwar einerseits eine verhältnismäßig einfache und leichte Beladung des Fahrzeuges von dessen Rückseite her und ermöglicht andererseits zugleich auch die Heranziehung der in der angehobenen Fahrstellung befindlichen Ladeplattform zur Versteifung des Chassis, so daß zumindest bei in der Fahrstellung befindlicher Ladeplattform eine hohe Stabilität des Fahrzeuges insgesamt erreicht wird. Zwar wird durch die Möglichkeit die Ladeplattform auf den Boden absenken zu können das Beladen des Fahrzeuges erleichtert, jedoch erfordert auch diese Bauart eines Fahrzeuges immer noch ein Auflegen der Last auf die Ladeplattform, was insbesondere bei schweren Lasten die Verwendung von Ladegräten erfordert.

Andere bekannte Bauarten von Transportfahrzeugen mit einem in der Draufsicht U-förmigen, nach hinten offenen Fahrzeugrahmen und einer vermittels antreibbarer Hubelemente zwischen einer abgesenkten Belade- oder Lastaufnahmestellung und einer angehobenen Fahrstellung hin und her verstellbaren Lasttrageinrichtung zeichnen sich dadurch aus, daß die Lasttrageinrichtung lediglich vermittels der Hubelemente mit dem Fahrzeugrahmen verbunden ist und der Fahrzeugrahmen daher unter Inkaufnahme eines erheblichen Gewichts-und Materialaufwandes in sich selbsttragend und absolut starr ausgebildet ist. Bei einer ersten aus der DE-B-12 47 152 bekannten Bauart solcherart gestalteter Transportfahrzeuge besteht die Lasttrageinrichtung des Fahrzeuges aus zwei zueinander und zu den beiden Längsschenkeln eines nach hinten offenen, in der Draufsicht U-förmigen Fahrzeugrahmens parallelen, balkenförmigen Tragschienen. welche die anzuhebende und zu transportierende Last lediglich untergreifen. Ein in ähnlicher Weise mit Tragschienen ausgestattetes Transportfahrzeug ist ferner auch aus der FR-A-2 029 637 bekannt. Bei diesem Transportfahrzeug ist die Lasttrageinrichtung aus zwei zueinander und zu den beiden Längsschenkeln des nach hinten offenen, in der Draufsicht U-förmigen Fahrzeugrahmens parallelen Tragschienen gebildet und untergreifen die Tragschienen lediglich die anzuhebende und zu transportierende Last, so daß auch hier keine diesen aussteifende Verbindung zwischen Last bzw. Lasttrageinrichtung und Fahrzeugrahmen erzielbar ist.
Ferner ist aus der GB-A-1 234 630 ein gattungsgemäßes Transportfahrzeug bekannt dessen Lasttrageinrichtung zwar durch einen bezüglich des Fahrzeugrahmens innenliegend angeordneten U-förmigen, nach hinten offenen Rahmen gebildet ist und bei dem zumindest die Längsschenkel des die Lasttrageinrichtung bildenden inneren Rahmens eine L-förmige Profilquerschnittsform aufweisen und mit ihrem horizontal gerichteten Profilflansch die anzuhebende und zu transportierende Last lediglich untergreifen. Charakteristischerweise fehlt auch hier jegliche Aussteifungswirkung des die Lasttrageinrichtung bildenden innenliegend angeordneten Rahmens bezüglich des Fahrzeugrahmens, so daß auch hier der Fahrzeugrahmen in sich steif und damit schwer und teuer ausgebildet sein muß.
Schließlich ist aus der FR-A-1 278 053 ein Transportfahrzeug mit einem in der Draufsicht U-förmigen, nach hinten offenen Fahrzeugrahmen bekannt geworden, bei welchem anstelle einer getrennten Lasttrageinrichtung vorgesehen ist, daß der Fahrzeugrahmen selbst absenkbar bzw. anhebbar ist, derart, daß die beiden Längsschenkel des nach hinten offenen, in der Draufsicht U-förmigen Fahrzeugrahmens die anzuhebende und zu transportierende Last untergreifen. Selbstverständlich erfordert auch diese Bauart eines Transportfahrzeuges einen entsprechend stabilen und damit schweren Fahrzeugrahmen.

Der Erfindung liegt die Aufgabe zugrunde ein Transportfahrzeug der eingangs bezeichneten Bauart dahingehend weiter zu verbessern, daß ohne Verlust an Stabilität bei einem insgesamt geringeren Eigengewicht des Fahrzeuges dessen Beladen hinsichtlich des Aufnehmens der Last, insbesondere auch unterschiedlicher Lasten, vereinfacht wird.

Diese Aufgabe wird erfindungsgemäß im Wesentlichen dadurch gelöst, daß die Lasttrageinrichtung wenigstens zweiteilig ausgebildet ist und aus zwei formschlüssig zusammenfügbaren und in der zusammengefügten Lage eine starre Einheit bildenden Teilen besteht, wobei das erste Teil der Lasttrageinrichtung durch einen in der Draufsicht U-förmigen, der Grundrißform des Chassis einbeschriebenen und in Fahrtrichtung gesehen nach hinten offenen sowie vermittels der Hubhebel der Hubeinrichtung an das Chassis angeschlossenen Rahmen und das zweite Teil der Lasttrageinrichtung durch die Last selbst gebildet ist und wobei ferner der das erste Teil der Lasttrageinrichtung bildender U-förmige Rahmen wenigstens hinsichtlich seiner Längsschenkel aus einem Profilmaterial besteht und die das zweite Teil der Lasttrageinrichtung bildende Last mit einem wenigstens teilweise umlaufenden Rahmen aus einem zum Profilmaterial der Längsschenkel des U-förmigen Rahmens komplementären Profilmaterial versehen ist.
Eine dieserart zweiteilige Ausbildung der Lasttrageinrichtung zeichnet sich im besonderen dadurch, daß die Last selbst die Aussteifung eines Fahrzeugteiles, hier zunächst der Lasttrageinrichtung selbst und in der Folge zugleich auch des Chassis des Fahrzeuges bildet, so daß der fahrzeuggebundene Teil der Lasttrageinrichtung leichter ausgebildet sein und damit das Eigengewicht des Fahrzeuges verringert werden kann. Zugleich ermöglicht die zweiteilige Ausbildung der Lasttrageinrichtung auch eine Vereinfachung der Beladung des Fahrzeuges bzw. der Aufnahme der Last, in der Weise, daß die Last nicht mehr auf eine fahrzeuggebundene Plattform oder ähnliches aufgesetzt werden muß, sondern mit entsprechend gestalteten Verbindungsmitteln ausgestattet ist und mittels des Fahrzeuges bzw. des fahrzeuggebundenen Teiles der Lasttrageinrichtung aus einer auf dem Boden abgestellten Parkstellung heraus vom Boden weg aufgenommen werden kann. In Verbindung mit dieser Art der Aufnahme der Last durch das Fahrzeug bietet sich naturgemäß auch die Verwendung des Fahrzeuges zur wechselweise aufeinanderfolgenden Aufnahme verschiedener Lasten an, beispielsweise kann die Last einmal aus einem entsprechend ausgestatteten Container und ein anderes mal aus einer entsprechend ausgestatteten, beladenen oder unbeladenen Plattform bestehen. Die nach hinten offene Gestaltung von Chassis und fahrzeugseitigem Teil der Lasttrageinrichtung gestattet es dabei das Fahrzeug bei abgesenktem fahrzeugseitigen Teil der Lasttrageinrichtung in einer solchen Weise an die Last heranzufahren, daß der fahrzeugseitige Teil der Lasttrageinrichtung diese zunehmend umfassend auf die Last bzw. deren Verbindungsmittel aufgeschoben wird, bis die Last vollständig vom fahrzeugseitigen Teil der Lasttrageinrichtung erfaßt ist und in die Fahrstellung angehoben werden kann. In diesem Zusammenhang ist erfindungsgemäß weiter vorgesehen, daß die freien Enden der Schenkel des durch einen U-förmigen Rahmen gebildeten fahrzeugseitigen Teiles der Lasttrageinrichtung bezüglich der Fahrzeuglängsmitte divergierend abgeschrägt sind und somit eine Zentrierhilfe zum gegenseitigen fluchtenden Ausrichten des fahrzeugseitigen und des lastseitigen Teiles der Lasttrageinrichtung bilden. In einer weiteren abgewandelten Ausführungsform kann ferner auch noch vorgesehen sein, daß das Chassis des Fahrzeuges mit einer Winde zum Verhohlen der Last bzw. zum Heranziehen des Fahrzeuges an die Last ausgestattet ist. Durch eine derartige Ausstattung kann gegebenenfalls ein umständliches Heranmanövrieren des Fahrzeuges an die Last vermieden und zugleich eine Sicherung der Last auf dem Fahrzeug erreicht werden, in der Weise, daß mittels der Winde zunächst das unbeladene Fahrzeug in eine Lastaufnahmestellung verbracht wird und anschließend die auf dem Fahrzeug aufgenommene Last mittels der Winde bzw. des Windenseiles gegen ein Verrutschen zum freien und offenen Fahrzeugende hin gesichert wird.

Der das erste Teil der Lasttrageinrichtung bildende U-förmige Rahmen ist vorteilhaft der lichten Weite und Länge des Chassis entsprechend gestaltet und besteht wenigstens hinsichtlich seiner Längsschenkel aus einem Profilmaterial. Die das zweite Teil der Lasttrageinrichtung bildende Last ist ihrerseits mit einem wenigstens teilweise umlaufenden, d.h. einem sich wenigstens entlang ihrer Längsseiten erstreckenden. Rahmen aus einem zum Profilmaterial der Längsschenkel des U-förmigen Rahmens komplementären Profilmaterial versehen.

In einer zur Beförderung von Lasten kleinerer Abmessungen abgewandelten Ausführungsform kann aber auch vorgesehen sein, daß die Lasttrageinrichtung aus mehren Einheiten besteht, wobei jede der Einheiten jeweils für sich eine eigenständige Lasttrageinrichtung bildet. Insbesondere kann in diesem Zusammenhang vorgesehen sein. daß in Fahrzeuglängsrichtung aufeinanderfolgend zwei oder mehr das erste Teil einer Lasttrageinrichtung durch einen in der Draufsicht U-förmigen, in Fahrtrichtung gesehen nach hinten offenen sowie vermittels der Hubhebel einer Hubeinrichtung an das Chassis angeschlossenen Rahmen angeordnet sind. Das zweite Teil jeder dieser Lasttrageinrichtungen wird auch hierbei durch die Last selbst gebildet. Diese Ausgestaltungsform zeichnet sich durch den Vorteil aus, daß mit einem Fahrzeug mehrere auch unterschiedliche Lasten einzeln aufgenommen und am jeweiligen Bestimmungsort auch einzeln wieder abgesetzt werden können.

Unabhängig davon ob das Fahrzeug mit einer einzigen oder mehreren Lasttrageinrichtungen ausgestattet ist kann vorgesehen sein, daß die das zweite Teil der Lasttrageinrichtung bildende Last durch eine Plattform mit einem wenigstens teilweise umlaufenden starren Rahmen aus einem einen zum Profilquerschnitt des den ersten Teil der Lasttrageinrichtung bildenden U-förmigen Rahmens komplementären Profilquerschnitt aufweisenden Profilmaterial gebildet ist. Es kann aber auch vorgesehen sein, daß die das zweite Teil der Lasttrageinrichtung bildende Last durch einen Container mit einem wenigstens teilweise umlaufenden starren Rahmen aus einem einen zum Profilquerschnitt des den ersten Teil der Lasttrageinrichtung bildenden U-förmige Rahmens komplementären Profilquerschnitt aufweisenden Profilmaterial gebildet ist.

Zur Sicherung der von der Lasttrageinrichtung aufgenommenen Last innerhalb des den fahrzeugseitigen Teil der Lasttrageinrichtung bildenden U-förmigen Rahmens ist zweckmäßigerweise ferner vorgesehen, daß dem den ersten Teil der Lasttrageinrichtung bildenden und nach hinten offenen, U-förmigen Rahmen ein den abstand zwischen seinen beiden Schenkeln überbrückendes Abschlußelement zugeordnet ist. In einer bevorzugten Ausgestaltungform besteht das Abschlußelement aus einer zwischen die beiden freien Enden der Schenkel des U-förmigen, den ersten Teil der die Lasttrageinrichtung bildenden Rahmens einsetzbaren Strebe besteht, die nach der Lastaufnahme durch die Lasttrageinrichtung an den fahrzeugseitigen Teil der Lasttrageinrichtung anfügbar ist. In einer besonders zweckmäßigen Ausgestaltung ist dabei die das Abschlußelement Bildende Strebe beidendig mit Eingriffsmitteln ausgestattet, welchen an den freien Schenkeln des U-förmigen Rahmens der Lasttrageinrichtung angeordnete komplementäre Gegenrastmittel zugeordnet sind. Beispielsweise kann hierbei vorgesehen sein, daß das Abschlußelement beidendig mit einer keil-oder teilkugelförmigen Eingriffsfläche und die beiden Schenkel des den ersten Teil der Lasttrageinrichtung bildenden, U-förmigen Rahmens mit jeweils einem durch eine keil-oder teilkugelförmige Ausnehmung gebildeten Gegenrastmittel versehen sind.

In weiterer Ausgestaltung der Erfindung ist zudem vorgesehen, daß der das erste Teil der Lasttrageinrichtung bildende, U-förmige Rahmen mit seitlichen, die Längsseitenteile des Chassis des Fahrzeuges untergreifenden Ausladungen versehen ist. Diese Ausgestaltung erlaubt es, die zweiteilige und bei aufgenommener Last in sich starre Lasttrageinrichtung mittels der fahrzeugeigenen Hubeinrichtung wenigstens gegen die Unterseite der Längsseitenteile des Chassis zu verspannen und dadurch hinsichtlich des Fahrbetriebes zugleich die Gesamtsteifigkeit des Chassis des Fahrzeuges zu erhöhen. Die seitlichen Ausladungen des U-förmigen Rahmens sind dabei zweckmäßigerweise an dessen Längsschenkeln ausgebildet bzw. starr mit diesen verbunden.

Ein besonders vorteilhafter Aspekt der Erfindung besteht weiterhin darin, daß die Anwendung einer erfindungsgemäßen zweiteiligen Lasttrageinrichtung nicht an eine bestimmte Fahrzeugart gebunden ist. Vielmehr kann die erfindungsgemäße zweiteilige Ausbildung einer Lasttrageinrichtung sowohl bei einem als Anhänger ausgebildeten Fahrzeug als auch bei einem selbstfahrenden Fahrzeug angewendet werden. Im letzteren Falle ist ein einachsiges oder mit einer Tandemachse ausgestattetes Chassis in an sich bekannter und gebräuchlicher Weise an einen mit lenkbaren Rädern, einer Fahrerkabine und einem Antriebsmotor ausgestatteten Zugkopf angeschlossen, wobei es gleichgültig ist, ob der Zugkopf mit einem Elektromotor oder einer Brennkraftmaschine ausgestattet ist.

Ein besonderes Merkmal der Erfindung wird ferner darin gesehen, daß eine das zweite Teil der Lasttrageinrichtung bildende, insbesondere durch eine Plattform mit einem wenigstens teilweise umlaufenden starren Rahmen gebildete Last mit wenigstens drei Bodenaufstandsrollen ausgestattet ist. Eine derartige Ausstattung ermöglicht es in besonders vorteilhafter Weise zugleich auch die auf dem Boden abgestellte Last verhältnismäßig leicht und insbesondere ohne zusätzlich Hilfsmittel zu verschieben bzw. zu manövrieren, wobei nicht zuletzt auch das gegenseitige Ausrichten von erstem und zweiten Teil der Lasttrageinrichtung erheblich erleichtert und vereinfacht wird.
Zwar reichen für eine standsichere Abstützung der Last grundsätzlich drei Bodenaufstandsrollen aus, jedoch ist im Interesse einer leichten Manövrierbarkeit einer zu bewegenden Last vorteilhafterweise vorgesehen, daß an der Plattform-oder Lastunterseite insgesamt vier durch Laufrollen gebildete Bodenaufstandsrollen angeordnet sind, wobei zweckmäßigerweise wenigstens zwei der durch Laufrollen gebildeten Bodenaufstandsrollen als um eine vertikale Achse schwenkbare Lenkrollen ausgebildet sind.
Vorteilhafterweise kann dabei zwecks Sicherstellung einer ausreichenden Bodenfreiheit der im ersten Teil der Lasttrageinrichtung aufgenommenen und angehobenen Last weiterhin vorgesehen sein, daß die durch Laufrollen gebildeten Bodenaufstandsrollen in die Plattform-oder Lastunterseite einklappbar, insbesondere in Verbindung mit einer Ausnehmung in deren Unterseite um eine horizontale Achse schwenkbar an die Plattform-oder Last angeschlossen sind.

Um schließlich auch noch sicher zu stellen, daß die auf dem Boden abgestellte Last bei leicht geneigtem Boden nicht ungewollt Eigenbewegungen ausführen kann ist erfindungsgemäß schließlich noch vorgesehen, daß wenigstens eine der an der Plattform-oder Lastunterseite angeordneten, durch Laufrollen gebildeten Bodenaufstandsrollen mit einer Feststell-oder Blockiereinrichtung ausgestattet ist.

Die Erfindung ist in der nachfolgenden Beispielsbeschreibung anhand einiger in der Zeichnung dargestellter Ausführungsbeispiele im Einzelnen beschrieben. In der Zeichnung zeigt die
- Figur 1: eine Seitenansicht eines Transportfahrzeuges und einer aufzunehmenden Last, wobei sich der fahrzeugseitige teil der Lasttrageinrichtung in der abgesenkten Aufnahmestellung und die Last in einem Abstand zum Fahrzeug und in einer auf dem Boden aufliegenden Ausgangsstellung befinden.
- Figur 2: eine Draufsicht zu Figur 1;
- Figur 3: eine Seitenansicht des Transportfahrzeuges bei aufgenommener und in die Fahrstellung angehobener Last;
- Figur 4: eine Draufsicht zu Figur 3:
- Figur 5: eine Draufsicht und eine Stirnansicht einer den Abstand zwischen den beiden Schenkeln des den fahrzeugseitigen Teil der Lasttrageinrichtung überspannenden Strebe;
- Figur 6: eine schematische Draufsicht auf die Rastmittel zwischen Strebe und fahrzeugseitigem Teil der Lasttrageinrichtung;
- Figur 7: eine Seitenansicht eines Transportfahrzeuges mit aufgenommener Last. wobei die Last durch einen Container gebildet ist:
- Figur 8: eine Seitenansicht des die Last bildenden Containers;
- Figur 9: eine Rückansicht des Transportfahrzeuges nach Figur 7 und 8 bei aufgenommener und in die Fahrstellung angehobener Last;
- Figur 10: eine Seitenansicht eines Transportfahrzeuges mit aufgenommener Last, wobei die Last durch eine beladene Plattform gebildet ist;
- Figur 11: eine Rückansicht des Transportfahrzeuges nach Figur 10 bei aufgenommener und in die Fahrstellung angehobener Last;
- Figur 12: eine Seitenansicht eines selbstfahrenden Transportfahrzeuges bei in die Lastaufnahmestellung abgesenktem fahrzeugseitigen Teil der Lasttrageinrichtung;
- Figur 13: eine Draufsicht zu Figur 12;
- Figur 14: eine Seitenansicht einer weiteren Ausgestaltungsform eines Transportfahrzeuges;
- Figur 15: eine Draufsicht zur Ausgestaltungsform nach Figur 14;
- Figur 16: eine ausschnittsweise und vergrößerte Einzeldarstellung zur Figur 2.

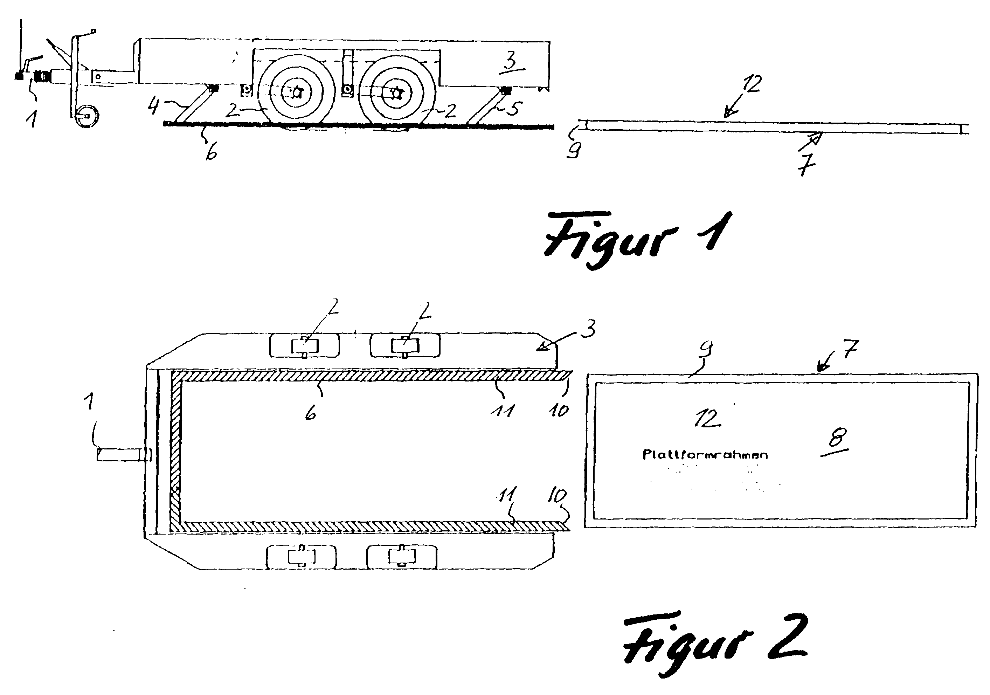

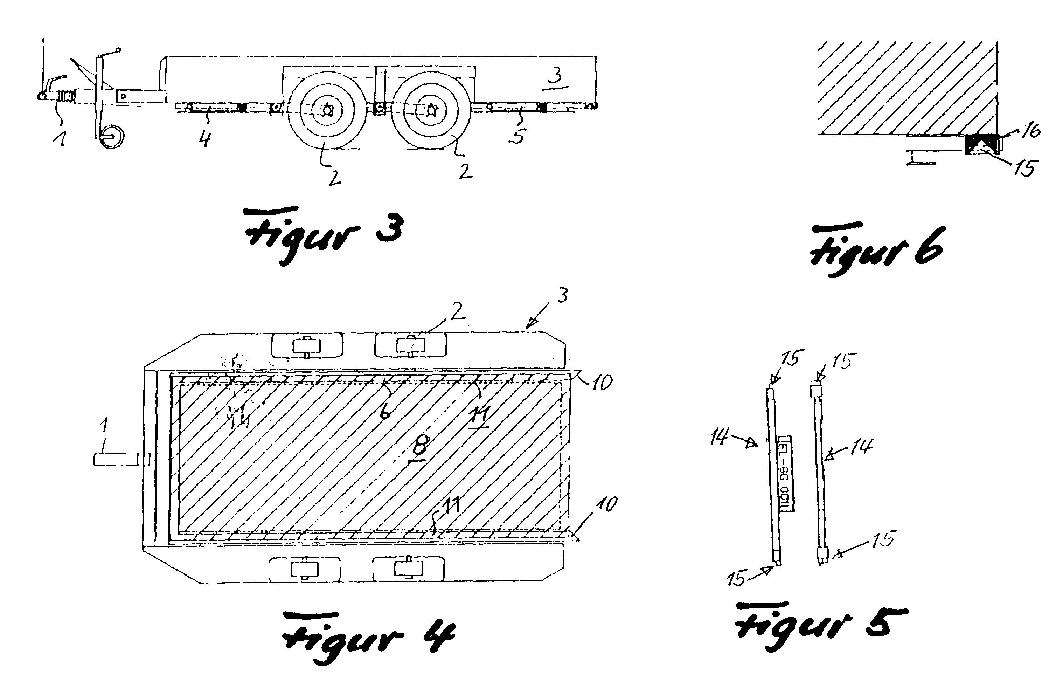

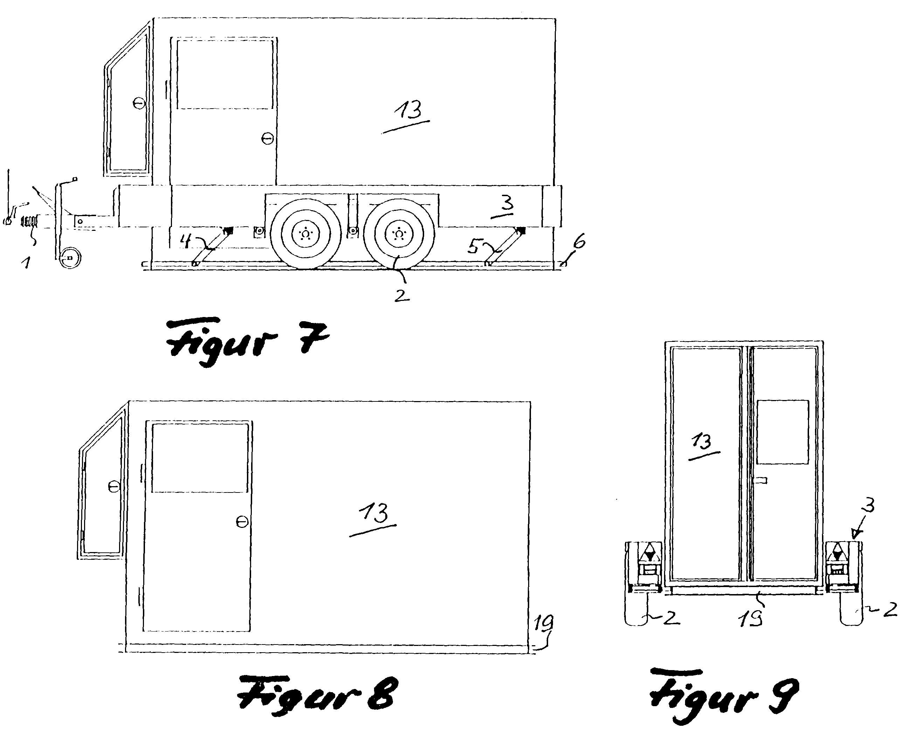

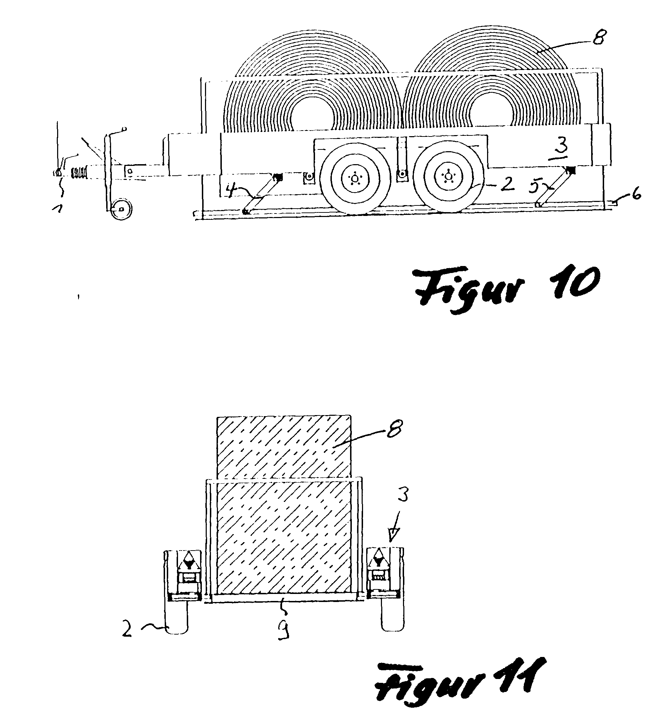

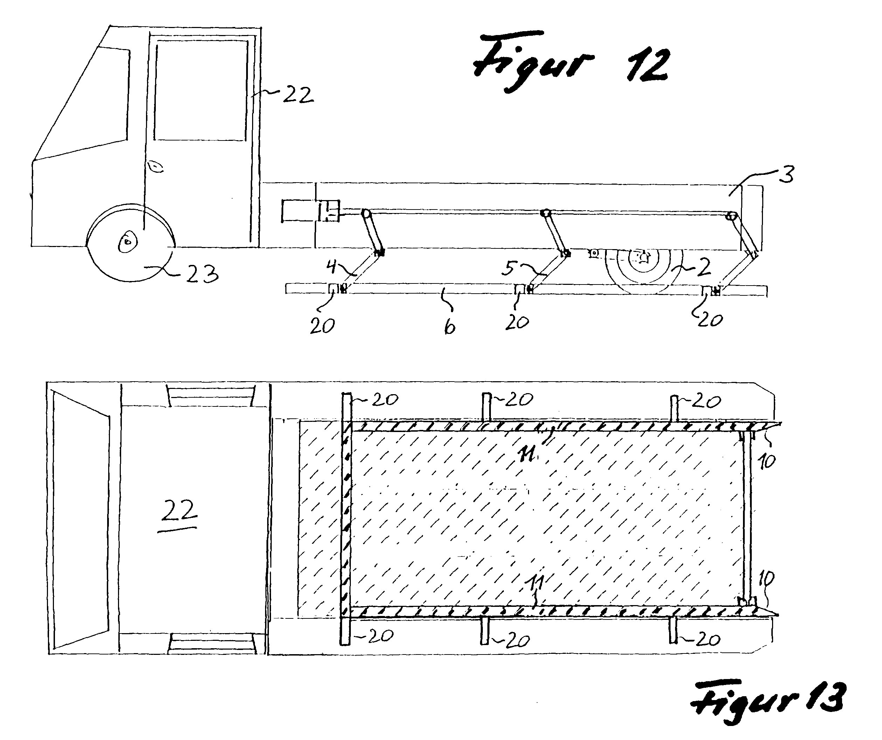

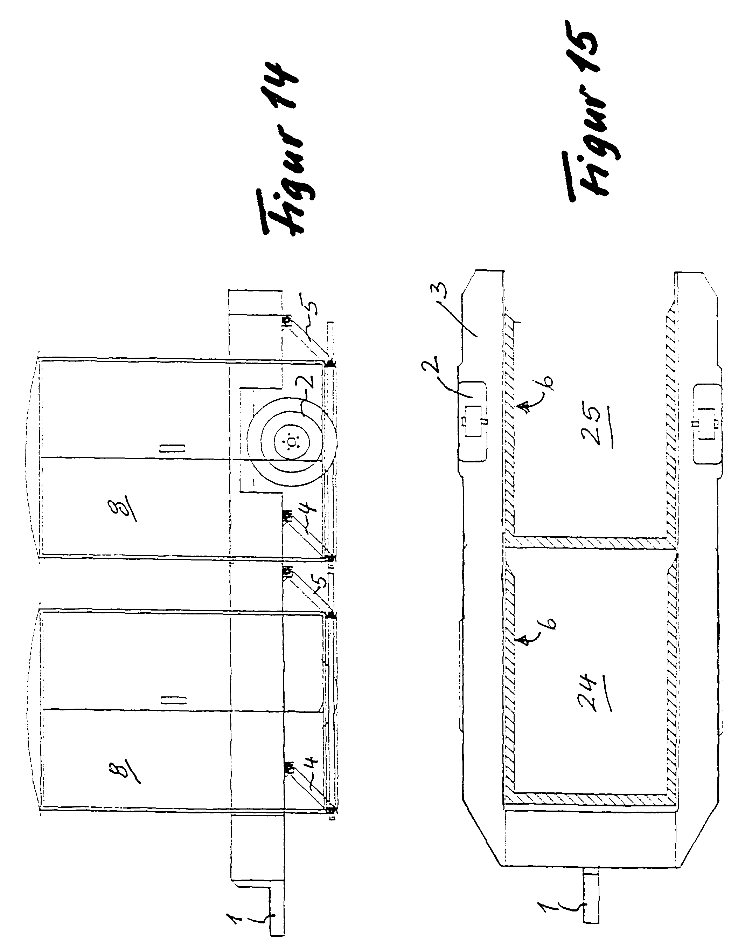

Das in den Ausführungsbeispielen 1 bis 10 dargestellte Transportfahrzeug ist jeweils als Anhängerfahrzeug ausgebildet und weist neben einer Zugdeichsel 1 ein über ein Fahrwerk (Räder) 2 gegen den Boden abgestütztes, in der Draufsicht im Wesentlichen U-formiges und nach hinten offenes Chassis 3 auf, an welches vermittels einer durch Parallelogrammhebelpaare 4, 5 gebildeten, über wenigstens einen in der Zeichnung nicht besonders dargestellten Hydraulikzylinder antreibbaren Hubeinrichtung der fahrzeugseitige Teil 6 einer insgesamt zweiteiligen Lasttrageinrichtung angeschlossen ist. Der fahrzeugseitige Teil 6 der Lasttrageinrichtung ist durch einen in der Draufsicht U-förmigen Rahmen gebildet und vermittels der um horizontale Achsen schwenkbaren Hubhebel 4, 5 zwischen einer auf den Boden abgesenkten Lastaufnahmestellung und einer angehobenen Fahrstellung hin und her bewegbar. Der das erste Teil 6 der Lasttrageinrichtung bildende U-förmige Rahmen ist in der gezeigten Ausgestaltungsform der lichten Weite und Länge des Chassis entsprechend gestaltet und besteht wenigstens hinsichtlich seiner Längsschenkel aus einem Profilmaterial. Die das zweite Teil 7 der Lasttrageinrichtung bildende Last 8 ist ihrerseits mit einem wenigstens teilweise umlaufenden, d.h. einem sich wenigstens entlang ihrer Längsseiten erstreckenden , Rahmen 9 aus einem zum Profilmaterial der Längsschenkel des U-förmigen Rahmens 6 komplementären Profilmaterial versehen. Um das Aufnehmen der Last 8 bzw. das Zusammenfügen der beiden Teile 6 und 9 der Lasttrageinrichtung zu erleichtern sind die freien Enden 10 der Schenkel 11 des durch einen U-förmigen Rahmen gebildeten fahrzeugseitigen Teiles 6 der Lasttrageinrichtung bezüglich der Fahrzeuglängsmitte divergierend abgeschrägt. Wie insbesondere aus den Darstellungen der Figuren 1 bis 6 bzw. 9 und 10 ersichtlich kann die das zweite Teil 7 der Lasttrageinrichtung bildende Last 8 durch eine Plattform mit einem umlaufenden starren Rahmen 9 aus einem einen zum Profilquerschnitt des den ersten Teil 6 der Lasttrageinrichtung bildenden U-förmige Rahmens komplementären Profilquerschnitt aufweisenden Profilmaterial gebildeten Rahmen bestehen. Gemäß der Darstellung nach Figur 7 bis 9 kann die das zweite Teil 7 der Lasttrageinrichtung bildende Last 8 aber auch durch einen mit einem umlaufenden starren Rahmen 19 aus einem einen zum Profilquerschnitt des den ersten Teil 6 der Lasttrageinrichtung bildenden U-förmige Rahmens komplementären Profilquerschnitt aufweisenden Profilmaterial ausgestatteten Container 13 gebildet sein. In den gezeigten Ausführungsformen weisen aus Gründen der besseren Übersichtlichkeit die Längsschenkel des den fahrzeuggebundenen Teil 6 der Lasttrageinrichtung bildenden Längsschenkel 11 des U-förmigen Rahmens einen einfachen rechteckigen Kastenprofilquerschnitt auf und weist der den lastseitigen Teil der Lasttrageinrichtung bildende Rahmen 9 einen einfachen U-Profilquerschnitt auf. Zur Sicherung der von der Lasttrageinrichtung 6 und 9 bzw. 19 aufgenommenen Last 8 bzw. 13 innerhalb des den fahrzeugseitigen Teil 6 der Lasttrageinrichtung bildenden U-förmigen Rahmens ist dem den ersten Teil 6 der Lasttrageinrichtung bildenden und nach hinten offenen, U-förmigen Rahmen ein den Abstand zwischen seinen beiden Schenkeln 11 überbrückendes Abschlußelement 14 zugeordnet, welches im gezeigten Ausführungsbeispiel aus einer zwischen die beiden freien Enden der Schenkel 11 des U-förmigen, den ersten Teil 6 der die Lasttrageinrichtung bildenden Rahmens einsetzbaren Strebe besteht, die nach der Lastaufnahme durch die Lasttrageinrichtung an den fahrzeugseitigen Teil 6 der Lasttrageinrichtung anfügbar ist. In der gezeigten Ausgestaltung ist die das Abschlußelement 14 bildende Strebe beidendig mit einer keilförmigen Eingriffsfläche 15 versehen und ist diesen Eingriffsflächen 15 an beiden Schenkeln 11 des den ersten Teil 6 der Lasttrageinrichtung bildenden, U-förmigen Rahmens jeweils eine keilförmige Ausnehmung 16 als Gegenrastmittel zugeordnet. Wie insbesondere aus den Figuren 12 und 13 ersichtlich ist der das erste Teil 6 der Lasttrageinrichtung bildende, U-förmige Rahmen mit seitlichen, die Längsseitenteile des Chassis des Fahrzeuges untergreifenden Ausladungen 20 versehen, welche beim Anheben der Lasttrageinrichtung mittels der fahrzeugeigenen Hubeinrichtung gegen die Unterseite der Längsseitenteile des Chassis verspannbar sind. In Verbindung mit der zweiteiligen und bei aufgenommener Last 8 in sich starren Ausbildung der Lasttrageinrichtung wird dadurch hinsichtlich des Fahrbetriebes zugleich eine Erhöhung der Gesamtsteifigkeit des Chassis des Fahrzeuges gewährleistet. Aus den Darstellungen der Figuren 12 und 13 ist weiterhin ersichtlich, daß das Transportfahrzeug auch als selbstfahrendes Fahrzeug ausgestaltet sein kann, insbesondere dadurch, daß an das die Lasttrageinrichtung beinhaltende einachsige Chassis ein eine Fahrerkabine 22 und einen Antriebsmotor sowie Lenkräder 23 umfassender Zugkopf angeschlossen ist.

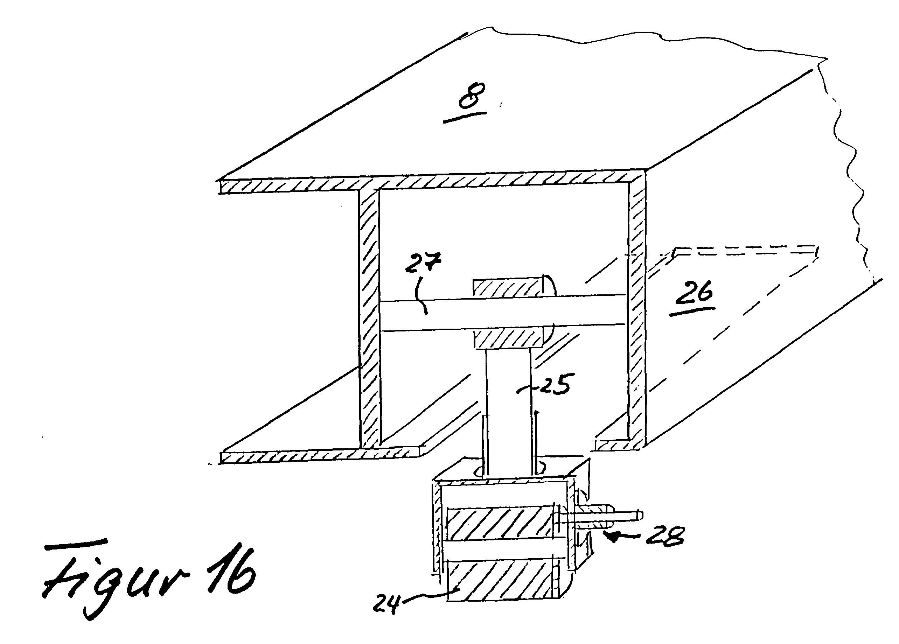

In den Figuren 14 und 15 ist mehr oder minder schematisch eine zur Beförderung von Lasten kleinerer Abmessungen abgewandelte Ausführungsform eines Transportfahrzeuges dargestellt, wobei vorgesehen ist, daß die Lasttrageinrichtung aus mehren Einheiten 24 und 25 besteht, deren jede jeweils für sich eine eigenständige zweiteilige Lasttrageinrichtung bildet. Insbesondere ist in dieser Ausführungsform vorgesehen, daß in Fahrzeuglängsrichtung aufeinanderfolgend zwei das erste Teil einer Lasttrageinrichtung bildende, durch einen in der Draufsicht U-förmigen, in Fahrtrichtung gesehen nach hinten offenen sowie vermittels der Hubhebel 4 und 5 einer Hubeinrichtung an das Chassis 3 angeschlossenen Rahmen 6 angeordnet sind. Das zweite Teil jeder dieser Lasttrageinrichtungen wird auch hierbei durch die Last 8 selbst gebildet. Mit dieser Ausgestaltungsform eines Transportfahrzeuges wird erreicht, daß mit einem Fahrzeug mehrere auch unterschiedliche Lasten einzeln aufgenommen und am jeweiligen Bestimmungsort auch einzeln wieder abgesetzt werden können.
Wie im Einzelnen in der Figur 16 dargestellt ist eine das zweite Teil der Lasttrageinrichtung bildende, durch eine Plattform mit einem umlaufenden starren Rahmen gebildete Last mit Bodenaufstandsrollen 24 ausgestattet, auch die auf dem Boden abgestellte Last 8 verhältnismäßig leicht und insbesondere ohne zusätzlich Hilfsmittel verschieben bzw. manövrieren, insbesondere gegenüber dem erstem Teil 7 der Lasttrageinrichtung ausrichten zu können. In der gezeigten Ausführungsform ist dabei vorgesehen, daß die Bodenaufstandsrollen 24 durch um eine vertikale Achse 25 schwenkbare Lenkrollen gebildet sind. Zwecks Sicherstellung einer ausreichenden Bodenfreiheit der im ersten Teil 7 der Lasttrageinrichtung aufgenommenen und angehobenen Last 8 ist weiterhin vorgesehen, daß die Bodenaufstandsrollen 24 in Verbindung mit einer Ausnehmung 26 in deren Unterseite in die Plattform 8 einklappbar, insbesondere um eine horizontale Achse 27 schwenkbar an die Plattform 8 angeschlossen sind. Die gezeigte Bodenaufstandsrolle 24 ist zudem noch mit einer Feststell-oder Blockiereinrichtung 28 ausgestattet.

## Patentansprüche

1. Transportfahrzeug mit einem über ein Fahrwerk (2) gegen den Boden abgestützten, in der Draufsicht im Wesentlichen U-förmigen, nach hinten offenen Chassis (3) und einer vermittels einer insbesondere durch paarweise und jeweils als Parallelogramm angeordnete Hubhebel (4, 5) gebildeten, antreibbaren Hubeinrichtung an dieses angeschlossenen Lasttrageinrichtung (6, 7), wobei die Lasttrageinrichtung (6, 7) vermittels um horizontale Achsen schwenkbarer Hubhebel (4, 5) zwischen einer auf den Boden abgesenkten Lastaufnahmestellung und einer angehobenen Fahrstellung hin und her bewegbar ist,
dadurch gekennzeichnet,
daß die Lasttrageinrichtung (6, 7) wenigstens zweiteilig ausgebildet ist und aus zwei formschlüssig zusammenfügbaren und in der zusammengefügten Lage eine starre Einheit bildenden Teilen (6, 7) besteht, wobei das erste Teil (6) der Lasttrageinrichtung (6, 7) durch einen in der Draufsicht U-förmigen, der Grundrißform des Chassis (3) einbeschriebenen und in Fahrtrichtung gesehen nach hinten offenen sowie vermittels der Hubhebel (4,5) der Hubeinrichtung an das Chassis (3) angeschlossenen Rahmen und das zweite Teil (7) der Lasttrageinrichtung (6, 7) durch die Last (8) selbst gebildet ist und wobei ferner der das erste Teil (6) der Lasttrageinrichtung (6, 7) bildende U-förmige Rahmen wenigstens hinsichtlich seiner Längsschenkel (11) aus einem Profilmaterial besteht und die das zweite Teil (7) der Lasttrageinrichtung (6, 7) bildende Last (8) mit einem wenigstens teilweise umlaufenden Rahmen (9) aus einem zum Profilmaterial der Längsschenkel (11) des U-förmigen Rahmens komplementären Profilmaterial versehen ist.

2. Transportfahrzeug nach Anspruch 1, dadurch gekennzeichnet, daß der das erste Teil (6) der Lasttrageinrichtung (6, 7) bildende U-förmige Rahmen der lichten Weite und Länge des vom Chassis (3) umgrenzten Freiraumes entsprechend gestaltet ist.

3. Transportfahrzeug nach Anspruch 1 und 2, dadurch gekennzeichnet, daß eine das zweite Teil (7) der Lasttrageinrichtung (6, 7) bildende Last (8) durch eine Plattform (12) mit einem wenigstens teilweise umlaufenden starren Rahmen (9) aus einem einen zum Profilquerschnitt des den ersten Teil (6) der Lasttrageinrichtung (6, 7) bildenden U-förmigen Rahmens komplementären Profilquerschnitt aufweisenden Profilmaterial gebildet ist.

4. Transportfahrzeug nach Anspruch 1 bis 3, dadurch gekennzeichnet, daß die das zweite Teil (7) der Lasttrageinrichtung (6, 7) bildende Last durch einen Container (13) mit einem wenigstens teilweise umlaufenden starren Rahmen (19) aus einem einen zum Profilquerschnitt des den ersten Teil (6) der Lasttrageinrichtung (6, 7) bildenden U-förmige Rahmens komplementären Profilquerschnitt aufweisenden Profilmaterial gebildet ist.

5. Transportfahrzeug nach Anspruch 1 bis 4, dadurch gekennzeichnet, daß dem den ersten Teil (6) der Lasttrageinrichtung (6, 7) bildenden und nach hinten offenen, U-förmigen Rahmen ein den Abstand zwischen seinen beiden Längsschenkeln (11) überbrückendes Abschlußelement (14) zugeordnet ist.

6. Transportfahrzeug nach Anspruch 1 bis 5, dadurch gekennzeichnet, daß das Abschlußelement (14) aus einer zwischen die beiden freien Enden der Längsschenkel (11) des U-förmigen, den ersten Teil (6) der die Lasttrageinrichtung (6, 7) bildenden Rahmens einsetzbaren Strebe besteht.

7. Transportfahrzeug nach Anspruch 1 bis 6, dadurch gekennzeichnet, daß die das Abschlußelement (14) bildende Strebe beidendig mit Eingriffsmitteln ausgestattet ist, welchen an den freien Längsschenkeln (11) des U-förmigen Rahmens der Lasttrageinrichtung (6, 7) angeordnete komplementäre Gegenrastmittel zugeordnet sind.

8. Transportfahrzeug nach Anspruch 1 bis 7, dadurch gekennzeichnet, daß das Abschlußelement (14) beidendig mit einer keil-(15) oder teilkugelförmigen Eingriffsfläche und die beiden Längschenkel (11) des den ersten Teil (6) der Lasttrageinrichtung (6, 7) bildenden, U-förmigen Rahmens mit jeweils einem durch eine keil-(16) oder teilkugelförmigen Ausnehmung gebildeten Gegenrastmittel versehen sind.

9. Transportfahrzeug nach Anspruch 1 bis 8, dadurch gekennzeichnet, daß der das erste Teil (6) der Lasttrageinrichtung (6, 7) bildende, U-förmige Rahmen mit seitlichen, die Längsseitenteile des Chassis (3) des Fahrzeuges untergreifenden Ausladungen (20) versehen ist.

10. Transportfahrzeug nach Anspruch 1 bis 9, dadurch gekennzeichnet, daß die das zweite Teil (7) der Lasttrageinrichtung (6, 7) bildende Last in Fahrzeuglängsrichtung mehrteilig (24,25) ausgebildet ist, wobei jeder der Teile (24,25) der Last eine der lichten Weite des den ersten Teil (6) der Lasttrageinrichtung (6, 7) bildenden U-förmigen Rahmens entsprechende Breite besitzt.

11. Transportfahrzeug nach Anspruch 1 bis 10, dadurch gekennzeichnet, daß am Chassis (3) des Fahrzeuges eine Winde zum Verhohlen der Last (8) bzw. zum Heranziehen des Fahrzeuges an die Last (8) angeordnet ist.

12. Transportfahrzeug nach Anspruch 1 bis 11, dadurch gekennzeichnet, daß es als Anhänger ausgebildet ist.

13. Transportfahrzeug nach Anspruch 1 bis 11, dadurch gekennzeichnet, daß an ein einachsiges bzw. mit einer Tandemachse ausgestattetes Chassis (3) ein mit lenkbaren Rädern (23), einer Fahrerkabine (22) und einem Antriebsmotor ausgestatteter Zugkopf angeschlossen ist.

14. Transportfahrzeug nach Anspruch 1 bis 11, dadurch gekennzeichnet, daß die freien Längsschenkel (11) des durch einen U-förmigen Rahmen gebildeten fahrzeugseitigen Teiles (6) der Lasttrageinrichtung (6, 7) bezüglich der Fahrzeuglängsmitte nach außen divergierend verlaufende Abweisflächen (10) aufweisen.

15. Transportfahrzeug nach einem der Ansprüche 1 bis 3, dadurch gekennzeichnet, daß eine das zweite Teil (7) der Lasttrageinrichtung (6, 7) bildende, insbesondere durch eine Plattform (12) mit einem wenigstens teilweise umlaufenden starren Rahmen (9) gebildete Last (8) mit wenigstens drei Bodenaufstandsrollen (24) ausgestattet ist.

16. Transportfahrzeug nach Anspruch 15, dadurch gekennzeichnet, daß insgesamt vier an der Plattform-oder Lastunterseite angeordnete, durch Laufrollen gebildete Bodenaufstandsrollen (24) vorgesehen sind.

17. Transportfahrzeug nach Anspruch 15 und 16, dadurch gekennzeichnet, daß wenigstens zwei der durch Laufrollen gebildeten Bodenaufstandsrollen (24) als um eine vertikale Achse schwenkbare Lenkrollen ausgebildet sind.

18. Transportfahrzeug nach Anspruch 15 und 17, dadurch gekennzeichnet, daß die durch Laufrollen gebildeten Bodenaufstandsrollen (24) in die Plattform- oder Lastunterseite einklappbar, insbesondere in Verbindung mit einer Ausnehmung (26) in deren Unterseite um eine horizontale Achse (27) schwenkbar an die Plattform-oder Last (8) angeschlossen sind.

19. Transportfahrzeug nach einem der Ansprüche 15 bis 18, dadurch gekennzeichnet, daß wenigstens eine der an der Plattform-oder Lastunterseite angeordneten, durch Laufrollen gebildeten Bodenaufstandsrollen (24) mit einer Feststell-oder Blockiereinrichtung (28) ausgestattet ist.

## Claims

1. Transport vehicle with a chassis (3) that is essentially U-shaped in plan view and is open towards the rear and supported on the ground by an undercarriage (2), and a load bearing device (6, 7) connected to the latter by a drivable lifting device, formed in particular by lifting levers (4, 5) arranged in pairs and as a parallelogram respectively, whereby the load bearing device (6, 7) can be moved back and forth by means of lifting levers (4, 5) pivotable about horizontal axes between a load receiving position lowered to the ground and a raised driving position, characterised in that the load bearing device (6, 7) is designed to have at least two parts and comprises two parts (6, 7) that can be joined together positively and in the joined position form a rigid unit, whereby the first part (6) of the load bearing device (6, 7) is formed by a frame that is U-shaped in plan view, following the outline of the chassis (3) and open towards the rear in travelling direction and also connected by the lifting levers (4, 5) of the lifting device to the chassis (3), and the second part (7) of the load bearing device (6, 7) is formed by the load (8) itself, and wherein furthermore the U-shaped frame forming the first part (6) of the load bearing device (6, 7) comprises a profiled material at least with respect to it longitudinal arms (11) and the load (8) forming the second part (7) of the load bearing device (6, 7) is provided with an at least partly circumferential frame (9) made from a profiled material complementary to the profile material of the longitudinal arms (11) of the U-shaped frame.

2. Transport vehicle according to claim 1, characterised in that the U-shaped frame forming the first part (6) of the load bearing device (6, 7) is designed according to the inside width and length of the free space surrounded by the chassis (3).

3. Transport vehicle according to claim 1 and 2, characterised in that a load (8) forming the second part (7) of the load bearing device (6, 7) is formed by a platform (12) with an at least partly circumferential rigid frame (9) from a profiled material having a profile cross section complementary to the profile cross section of the U-shaped frame forming the first part (6) of the load bearing device (6, 7).

4. Transport vehicle according to claims 1 to 3, characterised in that the load forming the second part (7) of the load bearing device (6, 7) is formed by a container (13) with an at least partly circumferential rigid frame (19) from a profiled material having a profile cross section complementary to the profile cross section of the U-shaped frame forming the first part (6) of the load bearing device (6, 7).

5. Transport vehicle according to claims 1 to 4, characterised in that a closing element (14) bridging the distance between its two longitudinal arms (11) is assigned to the U-shaped frame forming the first part (6) of the load bearing device (6, 7) and being open towards the rear.

6. Transport vehicle according to claims 1 to 5, characterised in that the closing element (14) comprises a member insertable between the two free ends of the longitudinal webs (11) of the U-shaped frame forming the first part (6) of the load bearing device (6, 7).

7. Transport vehicle according to claims 1 to 6, characterised in that the member forming the closing element (14) is provided at both ends with engagement means, to which complementary counter engaging means arranged on the free longitudinal arms (11) of the U-shaped frame of the load bearing device (6, 7) are assigned.

8. Transport vehicle according to claims 1 to 7, characterised in that the closing element (14) is provided at both ends with a wedge-shaped (15) or partly spherical engaging surface and the two longitudinal arms (11) of the U-shaped frame forming the first part (6) of the load bearing device (6, 7) are provided respectively with counter engaging means having a wedge-shaped (16) or partly spherical recess.

9. Transport vehicle according to claims 1 to 8, characterised in that the U-shaped frame forming the first part (6) of the load bearing device (6, 7) is provided with lateral projections (20) undergripping the longitudinal side parts of the chassis (3) of the vehicle.

10. Transport vehicle according to claims 1 to 9, characterised in that the load forming the second part (7) of the load bearing device (6, 7) is designed to comprise more than one part (24, 25) in longitudinal direction of the vehicle, whereby each of the parts (24, 25) of the load has a width corresponding to the inside width of the U-shaped frame forming the first part (6) of the load bearing device (6, 7)

11. Transport vehicle according to claims 1 to 10, characterised in that a winch for hauling the load (8) or for bringing the vehicle up to the load (8) is arranged on the chassis (3) of the vehicle.

12. Transport vehicle according to claims 1 to 11, characterised in that it is designed as a trailer.

13. Transport vehicle according to claims 1 to 11, characterised in that a traction head equipped with steerable wheels (23), a driver's cabin (22) and a drive motor is connected to a chassis (3) with a single axle or with a tandem axle.

14. Transport vehicle according to claims 1 to 11, characterised in that the free longitudinal arms (11) of the vehicle side part (6) of the load bearing device (6, 7) in the form of a U-shaped frame have repelling surfaces (10) diverging outwards with respect to the vehicle longitudinal centre.

15. Transport vehicle according to one of claims 1 to 3, characterised in that a load (8) forming the second part (7) of the load bearing device (6, 7), formed in particular by a platform (12) with an at least partly circumferential rigid frame (9) is equipped with at least three ground bearing rollers (24).

16. Transport vehicle according to claim 15, characterised in that a total of four ground bearing rollers (24) in the form of track rollers are provided arranged on the underside of the platform or load.

17. Transport vehicle according to claim 15 and 16, characterised in that at least two of the ground bearing rollers (24) formed by track rollers are designed as steering rollers pivotable about a vertical axis.

18. Transport vehicle according to claim 15 and 17, characterised in that the ground bearing rollers (24) formed by track rollers are connected to the platform or load (8) able to be folded into the underside of the platform or load, and can be pivoted in particular in association with a recess (26) into the underside about a horizontal axis (27).

19. Transport vehicle according to one of claims 15 to 15, characterised in that at least one of the ground bearing rollers (24) arranged on the underside of the platform or load and in the form of track rollers is equipped with a securing or blocking device (28).

## Revendications

1. Véhicule de transport comportant, d'une part, un châssis prenant appui sur le sol par l'intermédiaire d'un bogie (2) et présentant vu de dessus sensiblement une forme de U ouvert vers l'arrière et, d'autre part, un dispositif porte-charge (6), (7) qui est assemblé avec ledit châssis par l'intermédiaire d'un dispositif de levage constitué plus particulièrement par des leviers (4), (5) agencés par paires et formant un parallélogramme articulé, et qui est déplaçable, grâce aux leviers (4), (5) articulés autour d'axes horizontaux, entre une position abaissée de chargement sur le sol et une position relevée de roulage, **caractérisé en ce que**
- le dispositif porte-charge (6), (7) se compose d'au moins deux parties pouvant être assemblées par clabotage et formant après assemblage une unité rigide,
- la première partie (6) dudit dispositif porte-charge (6), (7) est constituée d'un cadre relié au châssis (3) par l'intermédiaire des leviers (4), (5) du dispositif de levage et présentant vu de dessus une forme en U ouvert vers l'arrière par rapport à la direction d'avancement, ledit cadre s'inscrivant dans la forme de la projection horizontale du châssis,
- la seconde partie (7) du dispositif porte-charge (6), (7) est constituée par la charge elle-même (8),
- au moins les branches longitudinales (11) du cadre en forme de U formant la première partie (6) du dispositif porte-charge (6), (7) sont des profilés,
- la charge (8) formant la seconde partie (7) du dispositif porte-charge (6), (7) est équipée d'un cadre (9) l'entourant au moins partiellement, constitué d'un profilé complémentaire au profilé des branches longitudinales (11) du cadre en forme de U de la première partie (6).

2. Véhicule de transport selon la revendication 1 **caractérisé en ce que** le cadre en forme de U constituant la première partie (6) du dispositif porte-charge (6), (7) est conçu pour correspondre à la largeur et à la longueur intérieures de l'espace libre délimité par le châssis (3).

3. Véhicule de transport selon les revendications 1 et 2 **caractérisé en ce que** la charge (8) formant la seconde partie (7) du dispositif porte-charge (6), (7) est constituée d'une plate-forme (12) qui est entourée au moins partiellement d'un cadre rigide (9) constitué d'un profilé dont la section transversale est complémentaire à la section transversale du profilé formant le cadre en forme de U de la première partie (6) du dispositif porte-charge (6), (7).

4. Véhicule de transport selon les revendications 1 à 3 **caractérisé en ce que** la charge (8) formant la seconde partie (7) du dispositif porte-charge (6), (7) est constituée d'un conteneur (13) qui est entouré au moins partiellement d'un cadre rigide (19) constitué d'un profilé dont la section transversale est complémentaire à la section transversale du profilé formant le cadre en forme de U de la première partie (6) du dispositif porte-charge (6), (7).

5. Véhicule de transport selon les revendications 1 à 4 **caractérisé en ce que** le cadre en forme de U ouvert vers l'arrière, constituant la première partie (6) du dispositif porte-charge (6), (7) est associé à un élément fermant (14) reliant les deux branches longitudinales distantes l'une de l'autre dudit cadre en forme de U.

6. Véhicule de transport selon les revendications 1 à 5 **caractérisé en ce que** l'élément fermant (14) est constitué d'une traverse pouvant être insérée entre les extrémités libres des branches longitudinales (11) du cadre en forme de U constituant la première partie (6) du dispositif porte-charge (6), (7).

7. Véhicule de transport selon les revendications 1 à 6 **caractérisé en ce que** la traverse constituant l'élément fermant (14) est équipée à ses deux extrémités de moyens d'engagement qui coopèrent avec des moyens de verrouillage complémentaires prévus sur les extrémités libres des branches longitudinales (11) du cadre en forme de U du dispositif porte-charge (6), (7).

8. Véhicule de transport selon les revendications 1 à 7 **caractérisé en ce que** l'élément fermant (14) est pourvu à ses deux extrémités d'une surface d'engagement en forme de biseau (15) ou de sphère tronquée et que les deux branches longitudinales (11) du cadre en forme U constituant la première partie (6) du dispositif porte-charge (6), (7) sont équipées chacune d'un moyen de verrouillage complémentaire en forme de biseau (16) ou constitué d'un évidement en forme de sphère tronquée.

9. Véhicule de transport selon les revendications 1 à 8 **caractérisé en ce que** le cadre en forme de U constituant la première partie (6) du dispositif porte-charge (6), (7) est pourvu saillies latérales (20) s'engageant sous les côtés longitudinaux du châssis (3) du véhicule.

10. Véhicule de transport selon les revendications 1 à 9 **caractérisé en ce que** la charge constituant la seconde partie (7) du dispositif porte-charge (6), (7) est divisée en direction longitudinale en plusieurs unités (24), (25) dont chacune présente une largeur correspondant à la largeur intérieure du cadre en forme de U constituant la première partie du dispositif porte-charge (6), (7).

11. Véhicule de transport selon les revendications 1 à 10 **caractérisé par** un treuil disposé sur le châssis (3) du véhicule pour le touage de la charge (8), respectivement pour approcher le véhicule de la charge (8).

12. Véhicule de transport selon les revendications 1 à 11 **caractérisé en ce que** il est constitué d'une remorque.

13. Véhicule de transport selon les revendications 1 à 11 **caractérisé en ce que** une unité de traction composée de roues orientables (23), d'une cabine de conducteur (22) et d'un moteur de commande, est raccordée à un châssis (3) à essieur unique, respectivement à deux essieux.

14. Véhicule de transport selon les revendications 1 à 11 **caractérisé en ce que** les branches longitudinales libres (11) du cadre en forme de U constituant la première partie (6) du dispositif porte-charge comportent chacune une surface inclinée vers l'extérieur par rapport à l'axe longitudinal médian du véhicule.

15. Véhicule de transport selon les revendications 1 à 3 **caractérisé en ce que** une charge (8) formant la seconde partie (7) du dispositif porte-charge (6), (7) et constituée plus particulièrement d'une plate-forme (12) entouré au moins partiellement d'un cadre rigide (9), est équipée d'au moins trois roues d'appui sur le sol (240).

16. Véhicule de transport selon la revendication 15 **caractérisé par** au moins quatre roues d'appui sur le sol (240) disposées sur la face inférieure de la charge ou de la plate-forme et constituées de galets de roulement.

17. Véhicule de transport selon les revendications 15 et 16 **caractérisé en ce que** au moins deux des quatre roues d'appui sur le sol constituées de galets de roulement sont des galets de direction articulés autour d'un axe vertical (250).

18. Véhicule de transport selon les revendications 15 et 17 **caractérisé en ce que** les roues d'appui sur le sol (240) constituées de galets de roulement sont agencées sous la plate-forme ou charge (8) en étant articulées autour d'un axe horizontal (27) de façon à pouvoir être escamotées en se logeant dans des évidements (26) ménagés dans ladite face inférieure de la charge ou de la plate-forme.

19. Véhicule de transport selon l'un des revendications 15 à 18 **caractérisé en ce que** au moins une des roues d'appui sur le sol (240) disposées sur la face inférieure de la plate-forme ou de la charge et constituées de galets de roulement est équipée d'un dispositif d'arrêt ou de blocage (28).
